# EUROPÄISCHE PATENTSCHRIFT

(11) **EP 0 980 873 B1**
(45) Veröffentlichungstag und Bekanntmachung des Hinweises auf die Patenterteilung: **27.11.2002**
(21) Anmeldenummer: 99115955.9
(22) Anmeldetag: 13.08.1999
(51) Int. Cl.: C07F 17/00

(54) **Binucleare Metallhydridkomplexe und deren Verwendung als Katalysatoren für die (Co)polymerisation von polaren Monomeren**
Binuclear metal hydride complexes and their use as catalysts for the (co)polymerization of polar monomers
Complexes binucléaires à hydrure métallique et leur usage comme catalyseurs pour la (co)polymérisation des monomères polaires

(30) Priorität: 14.08.1998 DE 19836819
(43) Veröffentlichungstag der Anmeldung: 23.02.2000
(73) Patentinhaber: BASF AKTIENGESELLSCHAFT, 67056 Ludwigshafen (DE)
(72) Erfinder: Okuda, Jun, Prof. Dr., 55218 Ingelheim (DE); Hultzsch, Kai, 65207 Wiesbaden (DE); Geprägs, Michael, Dr., 67245 Lambsheim (DE)

(56) Entgegenhaltungen:
- SHAPIRO E.J. ET AL: "A Unique Example of a Single-Component Alpha-Olefin Polymerization Catalyst" ORGANOMETALLICS, Bd. 9, Nr. 3, 1990, Seiten 867-869, XP000886403
- SHAPIRO P.J. ET AL: "Model Ziegler-Natta Alpha-Olefin Polymerization Catalysts derived from ..." J.AM.CHEM.SOC., Bd. 116, Nr. 11, 1994, Seiten 4623-4640, XP000887175
- YING MU ET AL: "USE OF ALKANE ELIMINATION IN THE ONE-STEP SYNTHESIS OF ORGANOSCANDIUM COMPLEXES CONTAINING A NEW MULTIDENTATE CYCLOPENTADIENYL LIGAND" ORGANOMETALLICS,US,WASHINGTON, DC, Bd. 15, Nr. 14, 1. Januar 1996 (1996-01-01), Seiten 2720-2726, XP000612366 ISSN: 0276-7333
- M. Aulbach, F. Küber; "Metallocene-maßgeschneiderte Werkzeuge zur Herstellung von Polyolefinen"; Chemie in unserer Zeit/ 28.Jahrg. 1994/ Nr.4; Seiten 197-208

## Beschreibung

Die vorliegende Erfindung betrifft binucleare Metallhydridkomplexe der allgemeinen Formel (I) 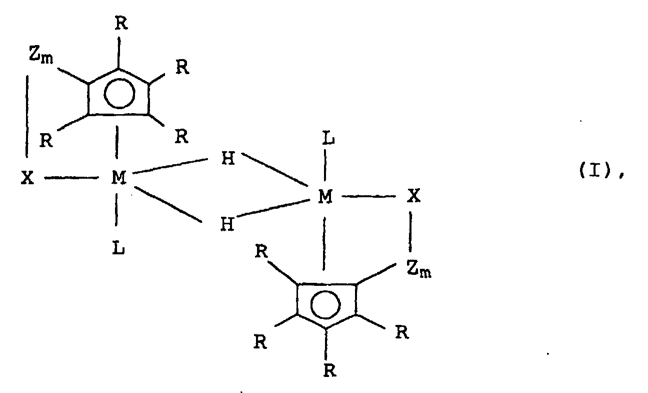 in der die Substituenten und Indizes die folgende Bedeutung haben:
- M: Yttrium,
- R: Wasserstoff, Halogen, C₁- bis C₂₀-Alkyl, C₃- bis C₁₀-Cycloalkyl, C₆- bis C₁₅-Aryl oder C₃- bis C₃₀-Organosilyl, wobei zwei benachbarte Reste R auch eine 4 bis 18 C-Atome aufweisende gesättigte oder ungesättigte cyclische oder heterocyclische Gruppe ausbilden können,
- Z: -SiR'₂-, -CR'₂-, -GeR'₂-, -SnR'₂-, -BR'- oder -O-,
- R': C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 10 C-Atomen im Arylteil,
- m: 1 oder 2,
- X: -O-, -S-, -NR''-, -PR''-, -OR'', -SR'', -NR''₂ oder -PR''₂,
- R": Wasserstoff, C₁- bis C₂₀-Alkyl, C₃- bis C₁₀-Cycloalkyl, C₆- bis C₁₅-Aryl, Alkylaryl mit 1 bis 10 C-Atomen im Alkyl- und 6 bis 10 C-Atomen im Arylteil oder C₃- bis C₃₀-Organosilyl und
- L: eine niedermolekulare, Lewis-basische, organische Verbindung.

Des weiteren betrifft die Erfindung ein Verfahren zur Herstellung der genannten binuclearen Metallhydridkomplexe sowie deren Verwendung als Katalysatoren für die (Co)polymerisation von (Meth)acrylsäure, (Meth)acrylaten, Vinylcyaniden oder Lactonen. Außerdem betrifft die Erfindung ein Verfahren zur Herstellung von (Co)polymeren aus polaren Monomeren.

Komplexe auf der Basis von Seltenerd-Metallen werden in jüngster Zeit verstärkt auf ihre Eignung als Katalysatoren für die koordinativ gesteuerte Polymerisation von unpolaren wie auch polaren olefinisch ungesättigten Monomeren untersucht (vgl. H. Yasuda, E. Ihara, Bull. Chem. Soc. Jpn. 1997, 70, S. 1745 - 1767). Polare Monomere wie Acrylate oder Acrylnitril werden bislang allerdings, insbesondere in technischen Verfahren, immer noch nach radikalischen Verfahren polymerisiert. Radikalische Polymerisationsverfahren lassen sich jedoch häufig nur schlecht kontrollieren und führen zu Polymerprodukten mit breiter Molekulargewichtsverteilung. Erste Ansätze haben gezeigt, daß ausgewählte Katalysatoren auf der Basis von Seltenerd-Metallen auch für polare Monomere polymerisationsaktiv sein können.

Beispielsweise setzten Jiang et al., Eur. Polym. J., 1997, 33 (4), S. 577 - 578, mehrkomponentige Katalysatorsysteme auf der Basis von mit 2-Ethylhexylphosphonat substituierten Lanthaniden zur Polymerisation von Acrylnitril ein. Als weitere Katalysatorbestandteile sind Dibutylmagnesium und N,N,N',N'-Tetramethylethylendiamin, jeweils im Überschuß, bezogen auf das Seltenerd-Metall, erforderlich. Um eine aktive Katalysatorspezies zu erhalten, ist das Katalysatorgemisch zudem einem Alterungsprozeß zu unterwerfen. Der erzielte Monomerumsatz liegt in der Regel nicht oberhalb von 50%.

Analog den Metallocenverbindungen auf Basis der frühen Übergangsmetalle ist es möglich, polymerisationsaktive Sandwichkomplexe der Seltenerd-Metalle herzustellen. In der US 5,312,881 werden verbrückte mononucleare Biscyclopentadienylkomplexe der Lanthanide beschrieben, mit deren Hilfe die Copolymerisation von α-substituierten Acrylaten gelingt. Dem Katalysatorsystem ist gegebenenfalls noch ein Lewis-saurer Cokatalysator wie Methylaluminoxan zuzusetzen, um ein zufriedenstellendes Polymerisationsergebnis zu erhalten. In der EP-A 0 634 429 wird aufgezeigt, daß mit Hilfe von verbrückten mononuclearen Sandwichkomplexen des Samariums Blockcopolymere aus polaren und unpolaren Monomeren zugänglich sind (s.a. Yasuda et al., Macromolecules, 1992, 25, S. 5115-5115). Allerdings ist der zu verwendende Metallocenkomplex äußerst empfindlich bzw. instabil und einer spektroskopischen Analyse im Grunde nicht zugänglich. Die Herstellung verbrückter Sandwich-Komplexe gestaltet sich demgemäß in der Regel präparativ aufwendiger als die Darstellung von Sandwich- oder Halbsandwichkomplexen.

US 5,464,906 beschreibt binucleare amidoverbrückte Cyclopentadienyl-Komplexe auf der Basis von Metallen der 3. Nebengruppe des Periodensystems der Elemente. Diese Komplexe sind für die Homopolymerisation von α-Olefinen, insbesondere Ethen geeignet. Auf die Polymerisation polarer Monomere wird nicht eingegangen.

Mit dem binuclearen Seltenerd-Metallkomplex [SmH(C₅Me₅)₂]₂ gelingt, wie Yasuda et al., Bull. Chem. Soc. Jpn., 1997, 70 (8), S. 1745 - 1767, zeigen konnten, die Polymerisation von polaren Monomeren. Allerdings lassen sich mit diesem Katalysator, wenngleich in hoher Ausbeute und über einen relativ weiten Temperaturbereich, nur Alkylmethacrylate polymerisieren. Mit dem binuclearen Metallkomplex [Y(OMe)(C₅Me₅)₂]₂ geht wiederum keine Polymerisationsaktivität im Hinblick auf polare Monomere einher. Mit binuclearen Neodym-Komplexen vom Typ [NdMe(t-BuCp)₂]₂ (t-Bu = tert-Butyl, Cp = Cyclopentadienyl) konnten Ren et al., Chin. J. Appl. Chem., 1995, 12, S. 105, dagegen Acrylnitril in geringen Ausbeuten polymerisieren.

Mu et al., Organometallics, 1996, 15, S. 2720 - 2726, synthetisierten binucleare Scandiumhydrid-Halbsandwichkomplexe unter Verwendung eines multidentaten Cyclopentadienylliganden und setzten die erhaltenen Komplexe für die Polymerisation von unpolaren Olefinen wie 1-Hexen ein. Bei Raumtemperatur wurde allerdings überhaupt keine Reaktion festgestellt, bei erhöhten Temperaturen fiel in geringen Mengen ein gummiartiges, nicht näher analysiertes Produkt an. Auf die Polymerisation polarer Monomerer wird bei Mu et al. an keiner Stelle eingegangen.

Schaverien, Organometallics, 1994, 13 (1), S. 69 - 82, gelingt zwar die Darstellung des binuclearen Yttriumhydrid-Halbsandwichkomplexes [Y(C₅Me₅) (OAr) (µ-H)]₂ (Ar = -2,6-C₆H₃-(t-Bu)₂). Dieser fällt allerdings nur in moderater Ausbeute an. Längere Reaktionszeiten (> 3h) führen zur Bildung eines Nebenproduktes in nicht geringen Mengen. Der erhaltene binucleare Yttriumhydrid-Halbsandwichkomplex erwies sich als mäßig polymerisationsaktiv gegenüber unpolaren olefinisch ungesättigten Monomeren. Die Polymerisation polarer Monomere wurde nicht untersucht.

Gemäß Duchateau et al., Organometallics, 1997, 16, S. 3511 - 3522, läßt sich der aus [(O-t-Bu)Me₂Si(N-t-Bu)]Y[CH(SiMe₃)₂] mittels Hydrierung erhaltene binucleare Yttriumhydridkomplex {[(O-t-Bu)Me₂Si(N-t-Bu)]₂Y(µ-H)}₂ aufgrund mangelnder Stabilität nur ¹H-NMR-spektroskopisch nachweisen, nicht jedoch isolieren. Als Katalysator für die Polymerisation unpolarer oder polarer Monomere ist er nicht geeignet. Des weiteren wurde für den binuclearen Yttriumhydridkomplex der Formel [(C₅H₄R)₂Y(µ-H) (THF)]₂ (R = H oder Me) in Gegenwart von Acetonitril als polarem Monomer Insertion zum entsprechenden Imidokomplex, nicht jedoch Polymerisation zu Polyacrylnitril beobachtet (s.a. Evans et al., J. Am. Chem. Soc., 1984, 106, S. 1291).

P.J. Shapiro et al., Organometallics 1990,9, S. 867-869, offenbart einen binuclearen Scandium-Hydrid-Metallocen Komplex und dessen Verwendung zur regiospezifischen Polymerisation von α-Olefinen. Die copolymerisation von polaren Monomeren wird nicht erwähnt.

Es wäre somit wünschenswert, stabile Komplexe der Seltenerd-Metalle zu finden, die für die Polymerisation eines breiten Spektrums an polaren Monomeren gut geeignet und gleichzeitig auf einfache Weise unproblematisch und kostengünstig zugänglich sind.

Der vorliegenden Erfindung lag daher die Aufgabe zugrunde, stabile, leicht zugängliche Metallkomplexe der Seltenerd-Metalle zu finden, mit denen sich vielfältige Monomere koordinativ zufriedenstellend polymerisieren lassen.

Demgemäß wurden die eingangs beschriebenen binuclearen Metallhydridkomplexe gefunden. Des weiteren wurde ein Verfahren zur Herstellung der genannten binuclearen Metallhydridkomplexe sowie deren Verwendung als Katalysatoren für die (Co)polymerisation von (Meth)acrylsäure, (Meth)acrylaten, Vinylcyaniden oder Lactonen gefunden. Außerdem wurde ein Verfahren zur Herstellung von (Co)polymeren aus polaren Monomeren gefunden.

Bevorzugte binucleare Metallhydridkomplexe gehen zurück auf Verbindungen der allgemeinen Formel (I), in der
- M: Yttrium,
- R: C₁- bis C₁₀-Alkyl oder C₃- bis C₂₁-Organosilyl, wobei zwei benachbarte Reste R auch einen kondensierten aromatischen Cyclus bilden können,
- Z: -SiR'₂- oder -CR'₂-,
- R': C₁- bis C₁₀-Alkyl oder C₆- bis C₁₀-Aryl,
- m: 1,
- X: -NR"- oder -PR''-,
- R": C₁- bis C₁₀-Alkyl, C₆- bis C₁₀-Aryl oder Alkylaryl mit 1 bis 6 C-Atomen im Alkyl- und 6 bis 10 C-Atomen im Arylteil und
- L: Tetrahydrofuran, 2,5-Dialkyltetrahydrofuran, Dioxan, Dialkylether, Acetonitril, Triarylphosphin oder halogeniertes Triarylphosphin
bedeuten.

Als Zentralmetall M kommt in den erfindungsgemäßen binuclearen Komplexen (I) Yttrium in Frage (s.a. Lehrbuch der anorganischen Chemie, Holleman-Wiberg, de Gruyter, Berlin, 1985, S. 59). Die Metalle M liegen in den mononuclearen Komplexen im allgemeinen formal dreifach positiv geladen vor.

Als monoanionischer, η⁵-gebundener, cyclischer Ligand mit dem Substituenten -(Zₘ)- kommen neben Cyclopentadienyl (R = H) einfach negativ geladene fünfgliedrige Carbocyclen in Betracht, die neben dem Rest Z einfach oder mehrfach mit Resten R substituiert sind, beispielsweise mit Halogen wie Fluor, Chlor oder Brom, linearem oder verzweigtem C₁- bis C₂₀-Alkyl, bevorzugt C₁- bis C₁₀-Alkyl, wie Methyl, Ethyl, n-Propyl, i-Propyl, n-Butyl oder t-Butyl, C₃- bis C₁₀-Cycloalkyl, bevorzugt C₃- bis C₇-Cycloalkyl, wie Cyclopropyl oder Cyclohexyl, oder C₆- bis C₁₅-Aryl, bevorzugt C₆- bis C₁₀-Aryl, wie Phenyl oder Naphthyl. Unter geeignete Arylsubstituenten fallen auch z.B. mit C₁- bis C₆-Alkyl wie Methyl oder i-Propyl oder mit Halogen wie Fluor, Chlor oder Brom substituiertes C₆- bis C₁₅-Aryl, bevorzugt C₆- bis C₁₀-Aryl. Zwei benachbarte Reste R können auch gemeinsam eine 4 bis 18, bevorzugt 4 bis 15 C-Atome aufweisende gesättigte oder ungesättigte cyclische oder heterocyclische Gruppe bilden. Hierunter fallen beispielsweise auch ankondensierte Aryleinheiten. Demgemäß stellen ebenfalls Indenyl-, Fluorenyl- oder Benzindenylsysteme geeignete monoanionische η⁵-gebundene cyclische Liganden dar.

Weiterhin kommen als Reste R C₃- bis C₃₀-, bevorzugt C₃- bis C₂₁-Organosilylgruppen, -Si(R*)₃, in Frage. Die Reste R* können unabhängig voneinander C₁- bis C₁₀-Alkyl, bevorzugt C₁- bis C₇-Alkyl, z.B. Methyl, Ethyl oder i-Propyl, C₃- bis C₁₀-Cycloalkyl, bevorzugt C₃- bis C₇-Cycloalkyl, z.B. Cyclopropyl oder Cyclohexyl, C₆- bis C₁₀-Aryl, bevorzugt Phenyl, oder Alkylaryl mit 1 bis 4 C-Atomen im Alkyl- und 6 bis 10 C-Atomen im Arylteil, beispielsweise Benzyl, bedeuten.

Die Reste R können in einer Verbindung (I) sowohl übereinstimmen als auch voneinander abweichende Bedeutungen annehmen.

Als das Metall M komplexierende, η⁵-gebundene Liganden sind unter den vorgenannten Verbindungen besonders solche geeignet, die sich von Cyclopentadienyl, Tetra-C₁- bis C₆-alkylcyclopentadienyl, Indenyl, Fluorenyl oder Benzindenyl ableiten, wobei die drei letztgenannten Liganden auch ein- oder mehrfach mit C₁- bis C₆-Alkylgruppen substituiert sein können. Bevorzugt sind als den Substituenten Z tragende Reste Cyclopentadienyl, Tetra-C₁- bis C₄-alkylcyclopentadienyl, Indenyl, Benzindenyl und 1- bis 3-fach C₁- bis C₄-alkylsubstituiertes Indenyl oder Benzindenyl. Besonders bevorzugt wird auf mit dem Rest Z substituiertes Cyclopentadienyl, Tetramethylcyclopentadienyl oder Indenyl, insbesondere Tetramethylcyclopentadienyl, zurückgegriffen. Üblicherweise verwendet man binucleare Komplexe (I), die über zwei identische η⁵-gebundene Liganden verfügen. Diese Liganden können aber auch in ihrem Ringsystem als solchem und/oder ihrem Ringsubstitutionsmuster voneinander abweichen.

Als Reste Z kommen bivalente Struktureinheiten auf der Basis von einatomigen Brückengliedern, deren freie Valenzen gegebenenfalls durch organische Reste R' abgesättigt sind, in Frage. Geeignet sind zum Beispiel als Brückenglieder die Silyl- (-SiR'₂-), Alkyl- (-CR'₂-), Germanyl- (-GeR'₂-), Stannyl- (-SnR'₂-), Boranyl- (-BR'-) oder die Oxogruppe (-O-). Es können auch zwei kovalent miteinander verbundene Einheiten Z (m = 2) ein Brückensegment zwischen dem monoanionischen, η⁵-gebundenen Liganden und der Einheit X ausbilden. In einem derartigen Brückensegment hat Z selbstverständliche nicht notwendigerweise in Form zweier identischer Struktureinheiten vorzuliegen. Unter den zweigliedrigen Brückensegmenten sind insbesondere die Systeme -SiR'₂-SiR'₂-, -SiR'₂-CR'₂-, -CR'₂-CR'₂-, -CR'=CR'-, -O-CR'₂- und -O-SiR'₂- in Betracht zu ziehen. Bevorzugt wird jedoch auf einatomig verbrückte Brückensegmente (m = 1), insbesondere auf die Systeme -SiR'₂- und -CR'₂- zurückgegriffen. Die Reste R' können C₁- bis C₂₀-Alkyl, bevorzugt C₁ bis C₁₀-Alkyl, beispielsweise Methyl, Ethyl oder i-Propyl, C₃- bis C₁₀-Cycloalkyl, bevorzugt C₃- bis C₇-Cycloalkyl, beispielsweise Cyclohexyl, C₆- bis C₁₅-Aryl, bevorzugt C₆- bis C₁₀-Aryl, insbesondere Phenyl, oder Alkylaryl mit 1 bis 10 C-Atomen im Alkyl- und 6 bis 10 C-Atomen im Arylteil, zum Beispiel Benzyl, bedeuten. Unter den Resten Z sind Di-C₁- bis C₇-alkylsubstituierte Silylgruppen wie Dimethylsilyl, Diethylsilyl oder Di-i-propylsilyl besonders bevorzugt.

Unter die Einheit X fallen zum Beispiel die Oxo- (-O-), Thio- (-S-), Amido- (-NR''-) oder die Phosphidogruppe (-PR''-). Diese Gruppen sind in der Regel über eine η¹-Bindung mit dem Metallzentrum M verbunden. Des weiteren kann X auch einen neutralen Zweielektronendonor wie -OR'', -SR'', -NR''₂ oder -PR''₂ bedeuten. Letztgenannte Reste X weisen zumeist eine koordinative Anbindung an das Metallzentrum M über ein freies Elektronenpaar auf. Bevorzugt stellt X eine Oxo- oder Thiogruppe, besonders bevorzugt eine Amidoeinheit dar. Als Substituenten R'' in den Resten -NR''-, -PR''-, -OR'', -SR'', -NR''₂ oder -PR''₂ setzt man im allgemeinen Wasserstoff, C₁- bis C₂₀-Alkyl, C₃- bis C₁₀-Cycloalkyl, C₆- bis C₁₅-Aryl, Alkylaryl mit 1 bis 10 C-Atomen im Alkyl- und 6 bis 10 C-Atomen im Arylteil oder C₃- bis C₃₀ Organosilyl ein. Besonders geeignet sind als Reste R'' sterisch anspruchsvolle Gruppen wie C₃- bis C₁₀-Alkylgruppen, zum Beispiel i-Propyl oder t-Butyl, die C₆- bis C₁₀-Arylgruppe wie Phenyl oder substituiertes Phenyl, und die Alkylarylgruppe mit 1 bis 6- C-Atomen im Alkyl- und 6 bis 10 C-Atomen im Arylteil, beispielsweise Benzyl. Besonders häufig wird -N(t-Butyl-) als Einheit X eingesetzt.

Als koordinativ an das Metallzentrum gebundener Ligand L kommen im allgemeinen niedermolekulare organische Lewis-Basen, d.h. Verbindungen, die über einen Zweielektronendonor verfügen, in Betracht. Der Ligand L stellt beispielsweise Tetrahydrofuran, 2,5-Dialkyltetrahydrofuran wie 2,5-Dimethyltetrahydrofuran, Dioxan, Dialkylether wie Dimethylether oder Diethylether, Acetonitril, Triarylphosphin, insbesondere Triphenylphospin, oder partiell oder perhalogeniertes Triarylphosphin wie Tris(p-fluorphenyl)phosphin oder Tris(pentafluorphenyl)phosphin dar. Bevorzugt ist L Tetrahydrofuran.

Bei dem erfindungsgemäßen binuclearen Metallkomplex (I) können die je zweifach vorkommenden Liganden und Reste R, R', R", Z, X, L sowie das Zentralmetall M und das η⁵-gebundene Ligandsystem in einer Verbindung (I) sowohl übereinstimmen als auch unterschiedliche Bedeutungen annehmen. Im allgemeinen stimmen die Liganden, die Reste und die Zentralmetalle M in ihren jeweiligen Bedeutungen überein.

Besonders bevorzugte binucleare Metallhydridkomplexe sind beispielsweise Bis[tetramethylcyclopentadienyl(tert-butylamido)dimethylsilyl-yttriumhydrid], Bis[tetramethylcyclcpentadienyl(benzylamido)dimethylsilyl-yttriumhydrid], Bis[indenyl(tertbutylamido)dimethylsilyl-yttriumhydrid] oder Bis[indenyl(benzylamido) dimethylsilyl-yttriumhydrid].

Die erfindungsgemäßen binuclearen Komplexe gemäß der allgemeinen Formel (I) erhält man durch hydrierende Behandlung mononuclearer Metallkomplex der allgemeinen Formel (II) 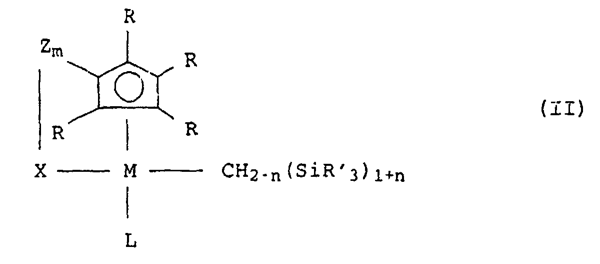 in der n = 0 oder 1 ist und die übrigen Substituenten und Indizes die bereits vorgehend beschriebene allgemeine oder bevorzugte Bedeutung haben.

Üblicherweise wird die Herstellung der binuclearen Komplexe (I) in Gegenwart von Wasserstoff unter einem Druck im Bereich von 1,5 bis 100 bar, bevorzugt im Bereich von 2 bis 20 bar, und bei einer Temperatur im Bereich von 0 bis 100°C, bevorzugt von 10 bis 80°C durchgeführt. Bei Reaktionszeiten im Bereich von 2 bis 24 h, aber auch bereits unterhalb von 10 h fällt der erfindungsgemäße Metallkomplex üblicherweise in hoher Ausbeute, gegebenenfalls in Form eines Isomerengemisches an. In der Regel wird die Herstellung des binuclearen Komplexes (I) in einem inerten Lösungsmittel, beispielsweise einem niedermolekularen aliphatischen Kohlenwasserstoff wie n-Pentan, n-Hexan oder Cyclohexan, einem aromatischen Kohlenwasserstoff wie Benzol, Toluol oder Xylol oder einem halogenierten Kohlenwasserstoff wie Dichlormethan oder Chloroform durchgeführt. Bevorzugt wird auf aliphatische Kohlenwasserstoffe wie n-Pentan und n-Hexan zurückgegriffen. Komplexe der allgemeinen Formel (I) sind thermisch sehr stabil und zeigen selbst bei 50°C keine CH-Aktivierung oder einen H/D-Austausch mit deuterierten Lösungsmitteln. Mononucleare Komplexe der allgemeinen Formel (II) lassen sich unproblematisch, zum Beispiel ausgehend von Verbindungen des Typs Y[CH₂₋ₙ(SiMe₃)₁₊ₙ]₃ (III), durch Umsetzung mit Verbindungen wie [C₅R₄(H) (SiR'₂-XH)] (IV), z.B. [C₅Me₄(H) (SiMe₂NHt-Bu)], erhalten. Bei einer Reaktionstemperatur im Bereich von -20 bis 50°C genügen zumeist Reaktionszeiten von 1 bis 5 Stunden, um in aliphatischen Lösungsmitteln wie n-Hexan quantitative Ausbeuten zu erzielen.

Der erfindungsgemäße definierte Metallkomplex (I) kann sowohl als solcher als auch in Form einer beliebigen Mischung von unter die allgemeine Formel (I) fallenden Verbindungen als Katalysator für die Polymerisation von (Meth)acrylsäure, (Meth)acrylaten oder Vinylcyaniden sowiefür die Polymerisation von Lactonen eingesetzt werden.

Unter solche Monomere fallen Vinylcyanide wie Acrylnitril oder Methacrylnitril, Acrylsäure und die C₁- bis C₂₀-Alkyl- und C₆- bis C₁₅-Arylester der Acrylsäure, ebenfalls Methacrylsäure und die C₁ - bis C₂₀-Alkyl- und C₆- bis C₁₅-Arylester der Methacrylsäure oder deren Mischungen sowie Lactone, insbesondere solche enthaltend 3 bis 10 Ringkohlenstoffatome. Es können auch beliebige Mischungen an Lactonen eingesetzt werden. Als Acrylate geeignet sind insbesondere Methyl-, Ethyl-, Propyl-, n-Butyl-, t-Butyl-, 2-Ethylhexyl-, Glycidyl- und Phenylacrylat, als Methacrylate Methyl-, Ethyl-, Propyl-, n-Butyl-, t-Butyl-, 2-Ethylhexyl-, Glycidyl- und Phenylmethacrylat. Unter den Lactonen sind insbesondere Propyllacton, Valerolacton und Caprolacton zu nennen. Besonders bevorzugt als polare Monomere sind n-Butyl-, t-Butyl-, 2-Ethylhexylund Glycidylacrylat sowie Acrylnitril oder deren Mischungen.

Die Polymerisation der polaren Monomeren in Gegenwart von Verbindungen (I) kann in Masse oder in Lösung vorgenommen werden. Wird in Lösung polymerisiert, greift man bevorzugt auf aprotische Lösungsmittel zurück. Beispielsweise können aliphatische Kohlenwasserstoffe wie Pentan oder Hexan, aromatische Kohlenwasserstoffe wie Benzol, Toluol oder Xylol oder halogenierte Kohlenwasserstoffe wie Dichlormethan oder Chloroform zum Einsatz kommen. Des weiteren können auch niedermolekulare lineare oder cyclische Etherverbindugen wie Diethylether oder Tetrahydrofuran verwendet werden. Bevorzugt werden aromatische Kohlenwasserstoffe, insbesondere Toluol eingesetzt. Die Ausgangskonzentration des Monomeren wird dabei im allgemeinen auf einen Wert im Bereich von 0,001 bis 5, bevorzugt von 0,01 bis 4 mol/l eingestellt. Die Polymerisationstemperatur kann über einen weiten Bereich variiert werden. Üblicherweise wird eine Temperatur im Bereich von -70 bis 90°C, bevorzugt von 10 bis 60°C ausgewählt. Die Polymerisationsdauer bewegt sich in der Regel im Bereich von 1 bis 50 Stunden, bewährt haben sich Reaktionszeiten von 3 bis 24 Stunden. Die Polymerisationsreaktionen gelingen bei Normaldruck ebenso wie bei Drücken im Bereich von 0,001 bis 50 bar. Üblicherweise wird bei Drücken im Bereich von 0,5 bis 10 bar polymerisiert.

Bevorzugt werden die beschriebenen Polymerisationsreaktionen unter inerten Reaktionsbedingungen, d.h. unter Ausschluß von Sauerstoff und Feuchtigkeit, durchgeführt. Gegebenenfalls kann dabei auch ein Schutzgas wie Argon oder Stickstoff verwendet werden.

Um die Polymerisation zu starten, hat es sich als vorteilhaft herausgestellt, den erfindungsgemäßen Komplex (I) zu der Monomerlösung zu geben, Natürlich kann aber auch die Komplexverbindung (I) als solche oder in gelöster Form vorgelegt werden. Die Polymerisation erfordert üblicherweise nicht die Zugabe weiterer Coaktivatoren oder -katalysatoren. Das Verhältnis von Monomer zu Katalysator beträgt üblicherweise 100 bis 10 000, bevorzugt 100 bis 5000.

Die in Gegenwart von erfindungsgemäßen binuclearen Metallhydridkomplexen (I) erhaltenen Polymeren fallen regelmäßig in ataktischer Form an. Es lassen sich Molekulargewichte Mₙ im Bereich von 5000 bis 500 000 sowie bevorzugt größer 10 000 g/mol realisieren. Die erzielten Polydispersitäten (M_{w}/Mₙ) liegen im allgemeinen unterhalb von 2,0, nehmen aber ohne weiteres auch Werte kleiner 1,70 an.

Natürlich gelingt mit den beschriebenen binuclearen Metallhydridkomplexen nicht nur der Zugang zu beispielsweise Homopolyacrylnitril oder Homopolyacrylaten, sondern darüber hinaus sind auch Blockcopolymere zugänglich. Exemplarisch seien Poly(acrylnitril-b-ethylacrylat), Poly(tert-butylacrylat-b-methylacrylat), Poly(acrylnitril-b-ε-caprolacton) und Poly(tert-butylacrylat-b-ε-caprolacton) aufgeführt. Vorteilhafterweise werden die genannten Blockcopolymere durch sequentielle Zugabe der Einzelkomponenten synthetisiert. Das jeweils nachfolgende Blockmonomermaterial wird dabei in der Regel erst dann hinzugefügt, wenn das zuvor zugegebene Monomer vollständig abreagiert hat.

Die Polymerisationsreaktion wird im allgemeinen durch Zugabe einer protischen Verbindung, beispielsweise eines niedermolekularen Alkohols wie Methanol, Ethanol oder i-Propanol beendet. Das erhaltene (Co)polymer fällt in der Regel als Feststoff aus und kann mechanisch, z.B. mittels Filtration, abgetrennt werden. Die nach dem beschriebenen Verfahren erhaltenen (Co)polymere eignen sich für die Herstellung von Fasern, Folien und Formkörpern.

Die gemäß dem beschriebenen Verfahren erhaltenen homo- und copolymeren Acrylate können u.a. als Schlagzähmodifier in thermoplastischen Polymeren oder Polymerblends eingesetzt werden. Als geeignete thermoplastische Polymere oder Blendkomponenten seien Polyamide und Polyester genannt. Polyacrylnitril eignet sich u.a. als Fasermaterial.

Die erfindungsgemäßen binuclearen Metallhydridkomplexe zeichnen sich durch eine präparativ einfache und ökonomische Zugänglichkeit und eine gute thermische Stabilität aus. Sie sind für die Polymerisation eines breiten Spektrums an (Meth)acrylsäure, (Methacrylaten oder Vinylcyaniden geeignet, überdies lassen sich Lactone polymerisieren. Mit dem vorgenannten Verfahren sind sowohl Homo-, Co- als auch Blockcopolymere zugänglich. Des weiteren weisen die erhaltenen Polymere eine geringe Polydispersität auf. Da ein Zusatz von Cokatalysatoren bzw. -aktivatoren nicht erforderlich ist, fallen die erhaltenen Polymere direkt, d.h. auch ohne zusätzliche Aufreinigungsschritte, in sehr hoher Reinheit an.

Im folgenden wird die vorliegende Erfindung anhand von Beispielen näher erläutert.

### Beispiele:

Die Molekulargewichte der hergestellten Homopolymeren wurden mittels quantitativer ¹H-NMR-Spektroskopie durch Endgruppenanalyse bestimmt.

Die ¹H-NMR-, ¹³C-NMR- und ²⁹Si-NMR-spektroskopischen Untersuchungen wurden an einem Gerät DRX 400 der Fa. Bruker durchgeführt.
I) Herstellung eines binuclearen Yttriumhydridkomplexes
   a) Darstellung von Y(CH₂SiMe₃)₃(THF)₂
      Yttriumchlorid (586 mg) wurde in Tetrahydrofuran (THF) (30 ml) aufgenommen und 30 min bei 55°C gerührt. Das Solvens wurde destillativ entfernt und der feste Rückstand mit Hexan (40 ml) und THF (0,3 ml) versetzt. Bei -78°C wurde eine Lösung von LiCH₂SiMe₃ (856 mg) in Hexan (20 ml) zugegeben und die erhaltene Suspension 1,5 h bei 0°C gerührt. Filtration des Reaktionsgemisches lieferte Y(CH₂SiMe₃)₃(THF)₂ in Form farbloser Microkristalle. ¹H-NMR(C₆D₆, 25°C) : δ = -0.71 (d, ²J(Y,H) = 2.3 Hz, 6H; Y-CH₂), 0.27 (s, 27 H; SiCH₃), 1.30 (m, 8 H; β-CH₂), 3.93 (m, 8 H; α-CH₂); ¹³C-NMR (C₆D₆, 25°C) : δ = 4.6 (SiCH₃), 25.0 (β-CH₂), 33.7 (d, ¹J(Y,C) = 35.7 Hz, Y-CH₂), 70.8 (β-CH₂).
   b) Darstellung von [(N-t-Bu) (SiMe₂) (C₅Me₄)]Y(CH₂SiMe₃) (THF)
      Zu Y(CH₂SiMe₃)₃(THF)₂ (365 mg) in Pentan (10 ml) gab man bei 0°C eine Lösung von [C₅Me₄(H) (SiMe₂NHt-Bu)] (186 mg) in Hexan (5 ml) und rührte über einen Zeitraum von 2 h bei dieser Temperatur. Die dekantierte Reaktionslösung wurde im Vakuum eingeengt und das gewünschte Produkt mittels Kristallisation in kaltem Pentan (-30°C) in Form farbloser Mikrokristalle erhalten (320 mg). ([C₅Me₄(H)(SiMe₂NHt-Bu)] wurde nach einer Vorschrift von Shapiro et al., J. Am. Chem. Soc. 1994, 116, S. 4623, dargestellt). ¹H-NMR: δ = -0.93 (d, ²J(Y,H) = 3.1 Hz, 2H; Y-CH₂), 0.28 (s, 9 H, CH₂SiCH₃), 0.74 (s, 6 H, SiCH₃), 1.08 (br s, 4 H, β-CH₂), 1.38 (s, 9 H, C(CH₃)₃), 2.04, 2,19 (s, 6 H, C₅Me₄), 3.36 (br s, 4 H, α-CH₂); ¹³C-NMR δ = 4.7 (CH₂SiCH₃), 8.4 (NSiCH₃), 11.5, 14.0 (C₅Me₄), 24.7 (β-CH₂), 26.2 (d, ¹J(Y,C) = 44.9 Hz, Y-CH₂), 36.0 (C(CH₃)₃), 54.0 (C(CH₃)₃), 70.7 α-CH₂), 106.6 (C₅Me₄ C-SiCH₃), 122.3, 126.4 (C₅Me₄); ²⁹Si-NMR: δ = -25.0 (NSiMe₂), -2.7 (d, ²J(Y,Si) = 1.9 Hz, CH₂SiMe₃).
   c) Darstellung von {[(N-t-Bu) (SiMe₂) (C₅Me₄)]Y(µ-H) (THF)}₂
      Eine Lösung von [(N-t-Bu) (SiMe₂) (C₅Me₄)]Y(CH₂SiMe₃) (THF) (630 mg) in Pentan (10 ml) wurde unter einem Wasserstoffdruck von 4 bar 7 h bei Raumtemperatur gerührt. Man erhielt den binuclearen Yttriumhydridkomplex als weißen Feststoff in 64 %-iger Ausbeute. ¹H-NMR ([D₈]Toluol, 50°C): δ = 0.69 (s, 6 H, SiCH₃), 1.36 (s, 9 H, C(CH₃)₃, 1.46 (br m, 4 H, β-CH₂), 2.09, 2.22 (s, 6 H, C₅Me₄), 3.82 (br m, 4 H, α-CH₂), 1 5.50 (t, 1 H, ¹J(Y,H) = 28.8 Hz, YHY); ¹³C-NMR ([D₈]Toluol, 50°C): δ = 8.6 (SiCH₃), 12.2, 14.3 (C₅Me₄), 25.2 (β-CH₂), 36.8 (C(CH₃)₃), 55.0 (C(CH₃)₃, 72.1 (α-CH₂), 108.5 (C₅Me₄C-SiCH₃), 125.8 (C₅Me₄); ²⁹Si-NMR: δ =-25.5.
      Hauptisomer: ¹H-NMR ([D₈]Toluol, -40°C): δ = 0.81, 0.95 (s, 3 H, SiCH₃), 1.17 (m, 4 H, β-CH₂), 1.52 (s, 9 H, C(CH₃)₃, 2.02 (s, 6 H, C₅Me₄), 2.11, 2.54 (s, 3 H, C₅Me₄), 3.47, 3.85 (br m, 2 H, α-CH₂), 5.27 (t, 1H, ¹J(Y,H) = 29.0 Hz, YHY); ¹³C-NMR ([D₈]Toluol, -40°C): δ = 8.2, 9.3 (SiCH₃), 12.1, 12.3, 13.9, 14.7 (C₅Me₄), 25.0 (β-CH₂), 36.3 (C(CH₃)₃, 54.7 (C(CH₃)₃), 72.7 (α-CH₂), 107.1 (C₅Me₄ C-SiCH₃), 119.6, 122.8, 126.0, 126.2 (C₅Me₄); ²⁹Si-NMR: δ = -25.6.
      Nebenisomer: ¹H-NMR ([D₈]Toluol, -40°C): δ = 1.20, (m, 4 H, β-CH₂), 1.44 (s, 9 H, C(CH₃)₃, 2.05, 2.14, 2.20, 2.51 (s, 3 H, C₅Me₄), 3.78 (br m, 4 H, α-CH₂), 5.45 (t, 1H, ¹J(Y,H) = 28.6 Hz, YHY); ¹³C-NMR ([D₈]Toluol, -40°C): δ = 8.5, 9.0 (SiCH₃), 11.2, 11.6, 11.8, 12.4, 13.3, 14.1, 15.2, 15.6 (C₅Me₄), 24.9 (β-CH₂), 36.4 (C(CH₃)₃), 55.0 (C(CH₃)₃), 72.4 (α-CH₂), 107 (C₅Me₄ C-SiCH₃), 119.9, 123.3, 125.8 (C₅Me₄) ; ²⁹Si-NMR: δ = -25.7.
II) Polymerisationsreaktionen
   a) Homopolymerisation von Acrylnitril
      Zu Acrylnitril (2 g) gab man den gemäß I)c) erhaltenen binuclearen Komplex (126,1 mg), gelöst in Toluol (10 ml), und rührte bei Raumtemperatur über einen Zeitraum von 24 h. Nach Zugabe von Methanol (4 ml) zum Reaktionsgemisch konnte Polyacrylnitril als weißer Feststoff isoliert werden (480 mg).
   b) Homopolymerisation von t-Butylacrylat
      Zu t-Butylacrylat (5,8 g) gab man den gemäß I)c) erhaltenen binuclearen Komplex (94,5 mg), gelöst in Toluol (20 ml), und rührte bei Raumtemperatur über einen Zeitraum von 3 h. Nach Zugabe von Methanol (8 ml) zum Reaktionsgemisch konnte Polytert-butylacrylat als weißer Feststoff isoliert werden (635 mg). Mₙ = 13 000 g/mol, M_{w}/Mₙ = 1,69.

## Patentansprüche

1. Binucleare Metallhydridkomplexe der allgemeinen Formel (I) 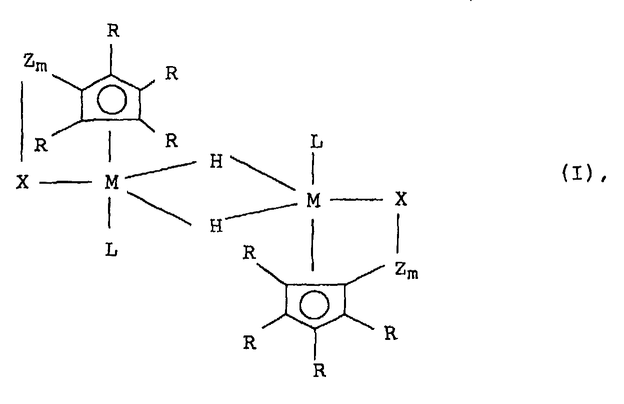 in der die Substituenten und Indizes die folgende Bedeutung haben:
M Yttrium,
R Wasserstoff, Halogen, C₁- bis C₂₀-Alkyl, C₃- bis C₁₀-Cycloalkyl, C₆- bis C₁₅-Aryl oder C₃- bis C₃₀-Organosilyl, wobei zwei benachbarte Reste R auch eine 4 bis 18 C-Atome aufweisende gesättigte oder ungesättigte cyclische oder heterocyclische Gruppe ausbilden können,
Z -SiR'₂-, -CR'₂-, -GeR'₂-, -SnR'₂-, -BR'- oder -O-,
R' C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 10 C-Atomen im Arylteil,
m 1 oder 2,
X -O-, -S-, -NR''-, -PR''-, -OR'', -SR'', -NR''₂ oder -PR''₂,
R" Wasserstoff, C₁- bis C₂₀-Alkyl, C₃- bis C₁₀-Cycloalkyl, C₆- bis C₁₅-Aryl, Alkylaryl mit 1 bis 10 C-Atomen im Alkyl- und 6 bis 10 C-Atomen im Arylteil oder C₃- bis C₃₀-Organosilyl und
L eine niedermolekulare, Lewis-basische, organische Verbindung.

2. Binucleare Metallhydridkomplexe nach Anspruch 1, **dadurch gekennzeichnet, daß**
M Yttrium,
R C₁- bis C₁₀-Alkyl oder C₃- bis C₂₁-Organosilyl, wobei zwei benachbarte Reste R auch einen kondensierten aromatischen Cyclus bilden können,
Z -SiR'₂- oder -CR'₂-,
R' C₁- bis C₁₀-Alkyl oder C₆- bis C₁₀-Aryl,
m 1,
X -NR"- oder -PR"-,
R" C₁- bis C₁₀-Alkyl, C₆- bis C₁₀-Aryl oder Alkylaryl mit 1 bis 6 C-Atomen im Alkyl- und 6 bis 10 C-Atomen im Arylteil und
L Tetrahydrofuran, 2,5-Dialkyltetrahydrofuran, Dioxan, Dialkylether, Acetonitril, Triarylphosphin oder halogeniertes Triarylphosphin
bedeuten.

3. Verfahren zur Herstellung binuclearer Metallhydridkomplexe gemäß den Ansprüchen 1 oder 2, **dadurch gekennzeichnet, daß** man einen mononuclearen Metallkomplex der allgemeinen Formel (II) 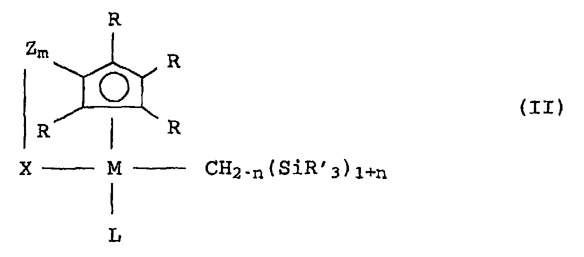 in der die Substituenten und Indizes die folgende Bedeutung haben:
M Yttrium,
R Wasserstoff, Halogen, C₁- bis C₂₀-Alkyl, C₃- bis C₁₀-Cycloalkyl, C₆- bis C₁₅-Aryl oder C₃- bis C₃₀-Organosilyl, wobei zwei benachbarte Reste R auch eine 4 bis 18 C-Atome aufweisende gesättigte oder ungesättigte cyclische oder heterocyclische Gruppe ausbilden können,
Z -SiR'₂-, -CR'₂-, -GeR'₂-, -SnR'₂-, -BR'- oder -O-,
R' C₁- bis C₂₀-Alkyl, C₃- bis C₁₀-Cycloalkyl, C₆- bis C₁₅-Aryl oder Alkylaryl mit 1 bis 10 C-Atomen im Alkyl- und 6 bis 10 C-Atomen im Arylteil,
m 1 oder 2,
X -O-, -S-, -NR''-, -PR''-, -OR'', -SR'', -NR''₂ oder -PR''₂,
R" Wasserstoff, C₁- bis C₂₀-Alkyl, C₃- bis C₁₀-Cycloalkyl, C₆- bis C₁₅-Aryl, Alkylaryl mit 1 bis 10 C-Atomen im Alkyl- und 6 bis 10 C-Atomen im Arylteil oder C₃- bis C₃₀-Organosilyl und
L eine niedermolekulare, Lewis-basische, organische Verbindung und
n 0 oder 1,
in Gegenwart von Wasserstoff unter einem Druck im Bereich von 1,5 bis 100 bar und bei einer Temperatur im Bereich von 0 bis 100°C umsetzt.

4. Verwendung der binuclearen Metallhydridkomplexe gemäß den Ansprüchen 1 oder 2 als Katalysatoren für die (Co)polymerisation von (Meth)acrylsäure, (Meth)acrylaten, Vinylcyaniden oder Lactonen.

5. Verfahren zur Herstellung von (Co)polymeren aus polaren Monomeren, **dadurch gekennzeichnet, daß** man (Meth)acrylsäure, die Ester der (Meth)acrylsäure, (Meth)acrylnitril oder Lactone in Gegenwart eines binuclearen Metallhydridkomplexes gemäß den Ansprüchen 1 oder 2 (co)polymerisiert.

## Claims

1. A binuclear metal hydride complex of the formula (I) 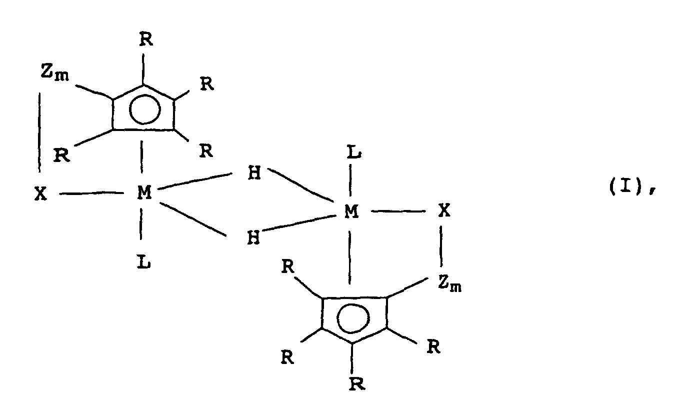 where the substituents and indices have the following meanings:
M is yttrium,
R is hydrogen, halogen, C₁-C₂₀-alkyl, C₃-C₁₀-cycloalkyl, C₆-C₁₅-aryl or C₃-C₃₀-organosilyl, where two adjacent radicals R can also form a saturated or unsaturated, cyclic or heterocyclic group having from 4 to 18 carbon atoms,
Z is -SiR'₂-, -CR'₂-, -GeR'₂-, -SnR'₂-, -BR'- or -O-,
R' is C₁-C₂₀-alkyl, C₃-C₁₀-cycloalkyl, C₆-C₁₅-aryl or alkylaryl having from 1 to 10 carbon atoms in the alkyl part and from 6 to 10 carbon atoms in the aryl part,
m is 1 or 2,
X is -O-, -S-, -NR''-, -PR''-, -OR'', -SR'', -NR''₂ or -PR''₂,
R" is hydrogen, C₁-C₂₀-alkyl, C₃-C₁₀-cycloalkyl, C₆-C₁₅-aryl, alkylaryl having from 1 to 10 carbon atoms in the alkyl part and from 6 to 10 carbon atoms in the aryl part or C₃-C₃₀-organosilyl and
L is a low molecular weight, Lewis-basic, organic compound.

2. A binuclear metal hydride complex as claimed in claim 1, wherein
M is yttrium,
R is C₁-C₁₀-alkyl or C₃-C₂₁-organosilyl, where two adjacent radicals R can also form a fused aromatic ring,
Z is -SiR'₂- or -CR'₂-,
R' is C₁-C₁₀-alkyl or C₆-C₁₀-aryl,
m is 1,
X is -NR''- or -PR''-,
R" is C₁-C₁₀-alkyl, C₆-C₁₀-aryl or alkylaryl having from 1 to 6 carbon atoms in the alkyl part and from 6 to 10 carbon atoms in the aryl part and
L is tetrahydrofuran, 2 , 5-dialkyltetrahydrofuran, dioxane, dialkyl ether, acetonitrile, triarylphosphine or halogenated triarylphosphine.

3. A process for preparing binuclear metal hydride complexes as claimed in claim 1 or 2, which comprises reacting a mononuclear metal complex of the formula (II) 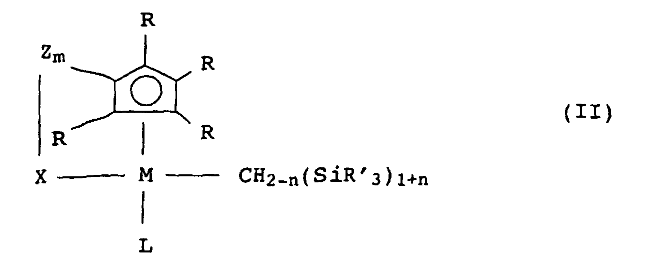 where the substituents and indices have the following meanings:
M is yttrium,
R is hydrogen, halogen, C₁-C₂₀-alkyl, C₃-C₁₀-cycloalkyl, C₆-C₁₅-aryl or C₃-C₃₀-organosilyl, where two adjacent radicals R can also form a saturated or unsaturated, cyclic or heterocyclic group having from 4 to 18 carbon atoms,
Z is -SiR'₂-, -CR'₂-, -GeR'₂-, -SnR'₂-, -BR'- or -O-,
R' is C₁-C₂₀-alkyl, C₃-C₁₀-cycloalkyl, C₆-C₁₅-aryl or alkylaryl having from 1 to 10 carbon atoms in the alkyl part and from 6 to 10 carbon atoms in the aryl part,
m is 1 or 2,
X is -O-, -S-, -NR''-, -PR''-, -OR'', -SR'', -NR''₂ or -PR''₂,
R" is hydrogen, C₁-C₂₀-alkyl, C₃-C₁₀-cycloalkyl, C₆-C₁₅-aryl, alkylaryl having from 1 to 10 carbon atoms in the alkyl part and from 6 to 10 carbon atoms in the aryl part or C₃-C₃₀-organosilyl and
L is a low molecular weight, Lewis-basic, organic compound and
n is 0 or 1
in the presence of hydrogen under a pressure in the range from 1.5 to 100 bar and at a temperature in the range from 0 to 100°C.

4. The use of a binuclear metal hydride complex as claimed in claim 1 or 2 as a catalyst for the (co)polymerization of (meth)acrylic acid, (meth)acrylates, vinyl cyanides or lactones.

5. A process for preparing a (co)polymer from polar monomers, which comprises (co)polymerizing (meth)acrylic acid, the esters of (meth)acrylic acid, (meth)acrylonitrile or lactones in the presence of a binuclear metal hydride complex as claimed in claim 1 or 2.

## Revendications

1. Complexes binucléaires à hydrure métallique de la formule générale (I) 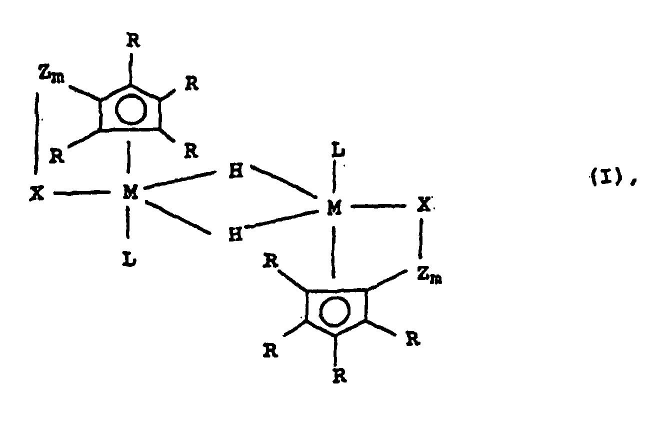 dans laquelle les substituants et indices ont la signification suivante:
M yttrium,
R hydrogène, halogène, alkyle en C₁ à C₂₀, cycloalkyle en C₃ à C₁₀, aryle en C₆ à C₁₅ ou organosilyle en C₃ à C₃₀, où deux restes R voisins peuvent également former un groupe cyclique ou hétérocyclique saturé ou insaturé comportant de 4 à 18 atomes de C,
Z -SiR'₂-, -CR'₂-, -GeR'₂-, -SnR'₂-, -BR'- ou -O-,
R' alkyle en C₁ à C₂₀, cycloalkyle en C₃ à C₁₀, aryle en C₆ à C₁₅ ou alkylaryle avec de 1 à 10 atomes de C dans la partie alkyle et de 6 à 10 atomes de C dans la partie aryle,
m 1 ou 2,
X -O-, -S-, -NR"-, -PR"-, -OR", -SR", -NR"₂ ou -PR"₂,
R" hydrogène, alkyle en C₁ à C₂₀, cycloalkyle en C₃ à C₁₀, aryle en C₆ à C₁₅, alkylaryle avec de 1 à 10 atomes de C dans la partie alkyle et de 6 à 10 atomes de C dans la partie aryle ou organosilyle en C₃ à C₃₀ et
L un composé organique à bas poids moléculaire basique selon Lewis.

2. Complexes binucléaires à hydrure métallique selon la revendication 1, **caractérisés en ce que**
M est de l'yttrium,
R est un radical alkyle en C₁ à C₁₀ ou organosilyle en C₃ à C₂₁, où deux restes R voisins peuvent aussi former un noyau aromatique condensé,
Z représente -SiR'₂- ou -CR'₂-,
R' est un radical alkyle en C₁ à C₁₀ ou aryle en C₆ à C₁₀,
m est égal à 1,
X représente -NR"- ou -PR"-,
R" est un radical alkyle en C₁ à C₁₀, aryle en C₆ à C₁₀ ou alkylaryle avec de 1 à 6 atomes de C dans la partie alkyle et de 6 à 10 atomes de C dans la partie aryle, et
L est du tétrahydrofuranne, du 2,5-dialkyltétrahydrofuranne, du dioxanne, de l'éther dialkylique, de l'acétonitrile, de la triarylphosphine ou de la triarylphosphine halogénée.

3. Procédé de préparation de complexes binucléaires à hydrure métallique selon la revendication 1 ou 2, **caractérisé en ce que** l'on fait réagir un complexe métallique mononucléaire de la formule générale (II) 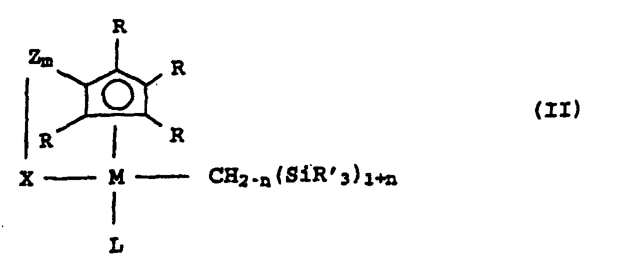 dans laquelle les substituants et indices ont la signification suivante:
M yttrium,
R hydrogène, halogène, alkyle en C₁ à C₂₀, cycloalkyle en C₃ à C₁₀, aryle en C₆ à C₁₅ ou organosilyle en C₃ à C₃₀, où deux restes R voisins peuvent aussi former un groupe cyclique ou hétérocyclique saturé ou insaturé comportant de 4 à 18 atomes de C,
Z -SiR'₂-, -CR'₂-, -GeR'₂-, -SnR'₂-, -BR'- ou -O-,
R' alkyle en C₁ à C₂₀, cycloalkyle en C₃ à C₁₀, aryle en C₆ à C₁₅ ou alkylaryle avec de 1 à 10 atomes de C dans la partie alkyle et de 6 à 10 atomes de C dans la partie aryle,
m 1 ou 2,
X -O-, -S-, -NR"-, -PR"-, -OR", -SR", -NR"₂ ou -PR"₂,
R" hydrogène, alkyle en C₁ à C₂₀, cycloalkyle en C₃ à C₁₀, aryle en C₆ à C₁₅, alkylaryle avec de 1 à 10 atomes de C dans la partie alkyle et de 6 à 10 atomes de C dans la partie aryle ou organosilyle en C₃ à C₃₀ et
L un composé organique à bas poids moléculaire basique selon Lewis, et
n 0 ou 1.
en présence d'hydrogène et sous une pression de l'ordre de 1,5 à 100 bar et à une température de l'ordre de 0 à 100°C.

4. Utilisation des complexes binucléaires à hydrure métallique selon les revendications 1 ou 2 comme catalyseurs pour la (co)polymérisation d'acide (méth)acrylique, de (méth)acrylates, de cyanures vinyliques ou de lactones.

5. Procédé de préparation de (co)polymères à partir de monomères polaires, **caractérisé en ce que** l'on (co)polymérise de l'acide (méth)acrylique, les esters d'acide (méth)acrylique, du (méth)acrylonitrile ou des lactones en présence d'un complexe binucléaire à hydrure métallique selon les revendications 1 ou 2.
